**Europäisches Patentamt**

**European Patent Office**

**Office européen des brevets**

(11) Veröffentlichungsnummer: **0 299 311**
**A2**

(12) # EUROPÄISCHE PATENTANMELDUNG

(21) Anmeldenummer: **88110616.5**

(51) Int. Cl.⁴: **H02J 13/00 , H04B 3/54**

(22) Anmeldetag: **02.07.88**

(30) Priorität: **14.07.87 CH 2682/87**

(43) Veröffentlichungstag der Anmeldung:
**18.01.89 Patentblatt 89/03**

(84) Benannte Vertragsstaaten:
**AT BE DE FR GB IT LU NL SE**

(71) Anmelder: **ZELLWEGER USTER AG**
**Wilstrasse 11**
**CH-8610 Uster(CH)**

(72) Erfinder: **Mueller, Beat**
**Witellikerstrasse 10**
**CH-8702 Zollikon Dorf(CH)**

(54) **Verfahren und Einrichtung zur Fernsteuerung von Schaltorganen.**

(57) Die Fernsteuerung erfolgt durch von einem Sender dem elektrischen Versorgungsnetz überlagerte Anweisungen in Form von Impulsbildern fester Länge, die aus einer Mehrzahl von Schritten bestehen. Jedes Sende-Impulsbild enthält zusätzlich zur jeweiligen Anweisung (AWl-AWm) mindestens eine Adresse (HGl-HGh; UGl-UGn; IAl-IAi), wobei die Anzahl der Adressen dem Detaillierungsgrad angepasst ist und jede Adresse und die Dateninformation durch ein Impulsbild der genannten festen Länge gebidet ist.

Dadurch kann jede einzelne Funktion individuell angesprochen werden und das verwendete Codesystem ist sicher und schnell.

FIG. 2

EP 0 299 311 A2

## Verfahren und Einrichtung zur Fernsteuerung von Schaltorganen

Die Erfindung betrifft ein Verfahren zur Fernsteuerung von Schaltorganen mittels von einem Sender dem elektrischen Versorgungsnetz überlagerter und den einzelnen auszulösenden Funktionen der Schaltorgane zugeordneter Anweisungen in Form von Impulsbildern fester Länge, welche aus einer Mehrzahl von Schritten bestehen, von denen eine vorgegebene Anzahl mit einem Steuerimpuls belegt ist, wobei während eines Sendevorgangs ein der jeweiligen Funktion zugeordnetes Impulsbild gesendet und beim Empfänger auf Uebereinstimmung mit dem diesem zugeordneten Impulsbild überprüft und bei Gutbefund zur Steuerung des entsprechenden Schaltorgans verwendet wird.

Bei einem unter dem Namen DECABIT (DECABIT - eingetragenes Warenzeichen der Zellweger Uster AG) bekannten Verfahren dieser Art besteht das Impulsbild aus zehn Schritten, von denen fünf durch einen Impuls und fünf durch eine Impulslücke gebildet sind. Bei Verwendung derartiger Impulsbilder lassen sich insgesamt 252 verschiedene Befehle und somit 126 "Ein"-/"Aus"-Befehlspaare bilden, von denen mit jedem eine beliebige Anzahl entsprechend eingestellter Empfänger selektiv ansprech- und steuerbar ist.

Durch die Erfindung soll nun dieses bekannte Verfahren dahingehend verbessert werden, dass jede einzelne Funktion individuell angesprochen werden kann, wobei das verwendete Codesystem sicher, schnell und flexibel strukturierbar sein soll.

Diese Aufgabe wird erfindungsgemäss dadurch gelöst, dass jedes Sende-Impulsbild zusätzlich zur jeweiligen Anweisung mindestens eine Adresse und gegebenenfalls eine Dateninformation aufweist, wobei die Anzahl der Adressen dem Detaillierungsgrad angepasst ist und jede Adresse und die Dateninformation aus der genannten Mehrzahl von Schritten fester Länge besteht.

Beim erfindungsgemässen Verfahren ist die Sicherheit insbesondere durch die Verwendung fehlererkennender Codes gegeben, d.h. von Codewörtern, bei denen eine vorgegebene Anzahl der Schritte mit einem Steuerimpuls belegt ist. Ausserdem kann die Sendegeschwindigkeit der Bandbreite des Uebertragunssystems angepasst werden. Die Schnelligkeit wird einerseits durch kurze Codewörter erreicht und anderseits durch die variable Anzahl von Adressen; und die flexible Strukturierbarkeit ist durch die variable Adressenanzahl gegeben, welche Gruppenbildungen auf mehreren hierarchischen Ebenen ermöglicht, und durch die Möglichkeit, diese Gruppen durch ferngesteuerte Umadressierung neu zu ordnen. Schliesslich ist das Verfahren durch die Verwendung von Codewörtern mit einer dem DECABIT-System entsprechenden Anzahl von Schritten mit dem DECABIT-System kompatibel.

Die Erfindung betrifft weiter eine Einrichtung zur Durchführung des genannten Verfahrens, mit einem Sender und mit diesem zugeordneten Rundsteuerempfängern mit einem Eingangs- und einem Auswerteteil. Die erfindungsgemässe Einrichtung ist dadurch gekennzeichnet, dass der Auswerteteil je einen Block für die Decodierung der Adressen, für die Decodierung der Anweisungen und für die Interpretation der Dateninformationen aufweist.

Nachfolgend wird die Erfindung anhand eines Ausführungsbeispiels und der Zeichnungen näher erläutert; es zeigt:

Fig. 1 ein Schema eines DECABIT-Befehls,

Fig. 2 ein allgemeines Schema einer Rundsteuersendung nach dem erfindungsgemässen Verfahren,

Fig. 3 schematische Beispiele für bestimmte Rundsteuersendungen nach dem erfindungsgemässen Verfahren, und

Fig. 4 ein vereinfachtes Schaltbild eines erfindungsgemässen Rundsteuerempfängers.

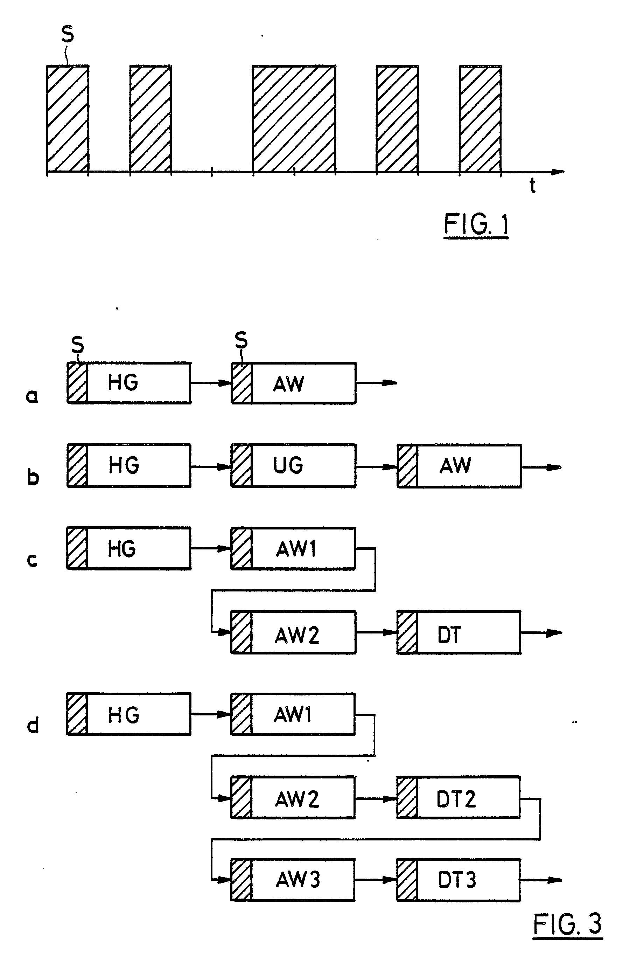

Fig. 1 zeigt das Zeitdiagramm eines DECABIT-Befehls. Die Uebermittlung eines derartigen auch als Telegramm bezeichneten Befehls beginnt mit der Aussendung eines ersten Signals, des sogenannten Startimpulses S, der einerseits die Ruhephase des Systems von dessen Betriebsphase trennt und anderseits den Synchronismus zwischen Sender und Empfänger bezüglich des nun folgenden Ablaufs sicherstellt. Dieser Ablauf besteht aus fünf weiteren Impulsen und fünf Impulslücken, die für einen bestimmten Befehl in charakteristischer Weise über die dem Startimpuls S folgenden zehn Schritte verteilt sind. Jeder dieser Schritte hat ebenso wie der Startimpuls S eine Länge von 0,6 s, so dass die vollständige Uebermittlung eines Befehls, einschliesslich Startimpuls S, eine Zeit von 6,6 s beansprucht.

Unter ausschliesslicher Verwendung derartiger Befehle mit fünf Impulsen und fünf Lücken ist die Anzahl der formulierbaren Befehle gleich der Zahl der Kombinationen 5. Klasse aus 10 Elementen, und diese ist gleich 252. Daraus lassen sich 126 "Ein"-/"Aus"-Befehlspaare bilden. Davon wird eine bestimmte Anzahl nicht benutzt und/oder für sogenannte Sammelbefehle reserviert, so dass beispielsweise 100 Doppelbefehle zur Verfügung stehen, von denen mit jedem eine beliebige Anzahl entsprechend eingestellter Empfänger ansprechund steuerbar ist. Weitere Details des DECABIT-Systems sollen hier nicht erörtert werden; es wird in diesem Zusammenhang auf die CH-A-540 590 (entsprechend US-A-3 833 886) und auf die Broschüre "Zellweger Impulse" Nr. 3 vom November 1971 verwiesen.

Das erfindungsgemässe System ermöglicht nun eine wesentlich erhöhte Anzahl der möglichen Befehle, indem jedes Telegramm so aufgebaut wird, dass es zusätzlich zum eigentlichen Befehl (nachfolgend als "Anweisung" bezeichnet) noch eine Adresse und gegebenenfalls Daten enthält, wobei bei der Adresse nach Hauptgruppen-, Untergruppen- und Individualadresse unterschieden wird.

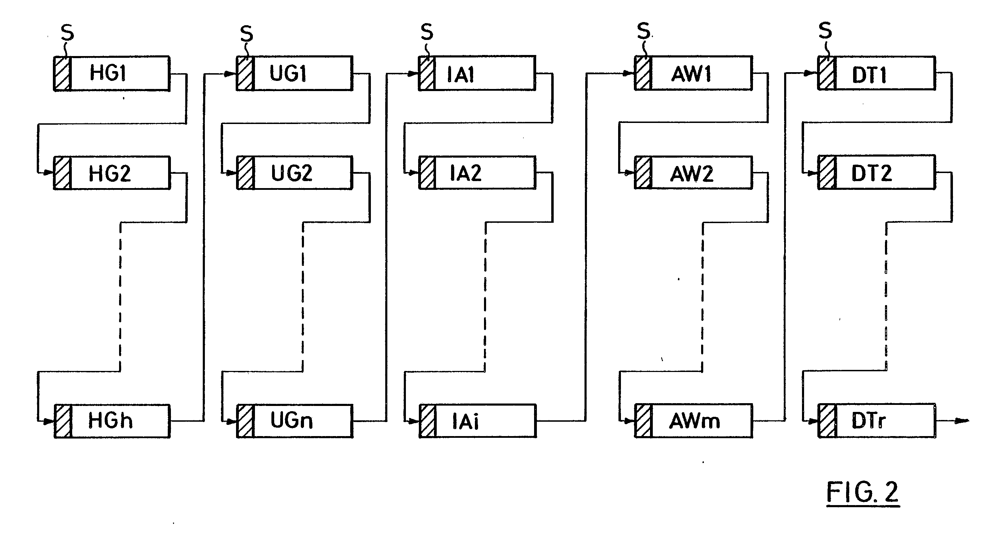

Dieser Aufbau ist in Fig. 2 schematisch dargestellt, wobei mit HGI bis HGh die Hauptgruppenadressen, mit UGI bis UGn die Untergruppenadressen, mit IAI bis IAi die Individualadressen, mit AWI bis AWm die Anweisungen und mit DTI bis DTr die Daten bezeichnet sind. Jede dieser Informationen, Adresse, Anweisung und Daten, wird jeweils von einem Startimpuls S eingeleitet.

Mit den Hauptgruppenadressen wird eine bestimmte Art von Verbrauchern angesprochen, beispielsweise Boiler, Klimaanlagen oder Elektrizitätszähler und dergleichen. Den Untergruppen entsprechen bestimmte Gruppen der einzelnen Arten von Verbrauchern, beispielsweise bei Boilern solche mit 3 kW, und mit den Individualadressen sind die einzelnen Verbraucher innerhalb einer derartigen Untergruppe ansprechbar. Die Art des für die Individualadressen verwendeten Codes und der sich aus diesem ergebenden Anzahl der möglichen Kombinationen bestimmt die mögliche Grösse einer Untergruppe. Gleiches gilt sinngemäss für die anderen Adressen.

Die Darstellung von Fig. 2 ist rein schematisch zu verstehen und soll keinesfalls bedeuten, dass zuerst alle Hauptgruppenadressen, dann alle Untergruppenadressen, dann die Individualadressen und schliesslich nacheinander die Anweisungen und die Daten gesendet werden. Es ist vielmehr auch möglich, das dargestellte Schema horizontal zu strukturieren, also jeweils eine Hauptgruppen-, Untergruppen- und Individualadresse mit den zugehörigen Anweisungen und Daten zu senden, dann die nächste Hauptgruppenadresse, usw. Es sind auch Varianten zwischen der dargestellten kolonnen- und der eben beschriebenen zeilenweisen Strukturierung möglich und werden in der Praxis auch verwendet, wobei als allgemeiner Grundsatz gelten kann, dass die Strukturierung bei Ueberwiegen der Adressinformation eher nach Kolonnen und bei Ueberwiegen der Anweisungen und Daten eher nach Zeilen erfolgt.

Vorzugsweise werden für die Hauptgruppenadressen Codes aus der 7 aus 10 Menge verwendet, für die Untergruppenadressen Codes aus der 3 aus 10 Menge und für die Individualadressen wieder solche aus der 7 aus 10 Menge. Damit kann der Empfänger den Schritt von den Haupt- zu den Untergruppen- und von dort zu den Individualadressen durch den Wechsel der Codemenge erkennen.

Weitere Strukturebenen sind durch weitere Codemengenwechsel in beliebiger Anzahl generierbar. In der Praxis wird dies jedoch kaum nötig sein. Die Zahl der Kombinationen 7. Klasse aus 10 Elementen und derjenigen 3. Klasse aus 10 Elementen ist jeweils gleich 120, so dass sich eine Adressengesamtzahl für Hauptgruppen-, Untergruppen- und Individualadressen von 120 hoch 3 ist gleich 1'728'000 ergibt, mit 120 möglichen Individualadressen pro Untergruppe und 120 möglichen Untergruppenadressen pro Hauptgruppe. Wenn eine gesamte Untergruppe angesprochen werden soll, können die Individualadressen, und wenn eine gesamte Hauptgruppe angesprochen werden soll, können zusätzlich auch noch die Untergruppenadressen weggelassen werden.

Da die Adressierung separat erfolgt, sind für die Anweisungen nur wenige Codes erforderlich. Dabei ist zwischen Anweisungen mit und solchen ohne Folgedaten zu unterscheiden. Für die Anweisungen wird wie beim DECABIT-System ein 5 aus 10-Code und für die Daten wird ein 7 aus 10- oder ein 3 aus 10-Code verwendet.

In der Praxis wird die Adressengesamtzahl geringer sein als 120 hoch 3, da einige der möglichen Codes aus Gründen der Störsicherheit weniger günstig sind und daher nicht verwendet werden. Man kann die Codes nach der Anzahl der Bit-Wertigkeitswechsel im Codewort, d. h. nach der Anzahl der Flanken von Bitwert 0 zu Bitwert 1 und umgekehrt unterscheiden, wobei die Betrachtung vom Beginn des Startbits bis und mit Ende des 10. Telegrammbitplatzes erfolgt. Bei beiden Codes, 7 aus 10 und 3 aus 10, sind je gleich viele Codewörter pro Anzahl der Bit-Wertigkeitswechsel vorhanden, und zwar für 2 Bit-Wertigkeitswechsel 1 Codewort, für 4 Bit-Wertigkeitswechsel 21 Codewör ter, für 6 Bit-Wertigkeitswechsel 63 und für 8 Bit-Wertigkeitswechsel 35, also zusammen die schon erwähnte Anzahl von 120 Codewörtern.

Wenn man vernünftigerweise davon ausgeht, dass es weniger wahrscheinlich ist, dass ein Störer im Netz ein gültiges Codewort mit vielen Bit-Wertigkeitswechseln generiert als ein solches mit wenigen, dann wird man Codewörter mit vielen Wertigkeitswechseln bevorzugt einsetzen. Es empfiehlt sich daher, in der Praxis zuerst die Codewörter mit 8 Bit-Wertigkeitswechseln einzusetzen, dann diejenigen mit 6 und notfalls auch noch diejenigen mit 4 Bit-Wertigkeitswechseln. Dann ergeben sich für eine Adressgruppe (Individualadressen) für 8 Bit-Wertigkeitswechsel 35, für nicht weniger als 6 Bit-Wertigkeitswechsel 98 und für nicht weniger als 4 Bit-Wertigkeitswechsel 119 Adressiermöglichkeiten. Für zwei Adressgruppen (Individual- und Untergruppenadressen) beträgt deren Anzahl 35 hoch 2 ist gleich 1'225, 98 hoch 2 ist gleich 9'604 bzw. 119 hoch 2 = 14'161 und für drei Adressgruppen (Indi vidual-, Untergruppen- und Hauptgruppenadressen)35 hoch 3 ist gleich 42'875, 98 hoch 3 = 941'192 bzw. 119 hoch 3 = 1'685'159 Möglichkeiten.

In den folgenden Tabellen 1 und 2 sind mögliche Anweisungen ohne und mit Folgedaten für Laststeuerung (Tabelle 1) und für Elektrizitätszähler (Tabelle 2) zusammengestellt. Aus den gezeigten Anweisungen ergeben sich für Tabelle 1 sieben mögliche Befehle für Anweisungen ohne und elf mögliche Befehle für Anweisungen mit Folgedaten und für Tabelle 2 sechs mögliche Befehle für Anweisungen ohne und elf mögliche Befehle für Anweisungen mit Folgedaten.

Tabelle 1

| Anweisungen für Lasteuerung | |
| --- | --- |
| ohne Folgedaten | mit Folgedaten |
| - Last einschalten<br>- Last ausschalten<br>- Last temperiert einschalten<br>- Last temperiert ausschalten<br>- Last zyklisch einschalten<br>- Last zyklisch ausschalten<br>- Letzte Vorprogrammierung streichen | - Last einschalten - Vorprogrammierung<br>- Last ausschalten - Vorprogrammierung<br>- Last temperiert einschalten - Vorprogr.<br>- Last temperiert ausschalten - Vorprogr.<br>- Last zyklisch einschalten - Vorprogr.<br>- Last zyklisch ausschalten - Vorprogr.<br>- Hauptgruppenadressen ändern<br>- Untergruppenadressen ändern<br>- Individualadressen ändern |

Tabelle 2

| Answeisungen für Elektrizitätszähler | |
| --- | --- |
| ohne Folgedaten | mit Folgedaten |
| - Tarif 1 einschalten | - Tarif 1 einschalten - Vorprogrammierung |
| - Tarif 2 einschalten | - Tarif 2 einschalten - Vorprogrammierung |
| - Tarif 3 einschalten | - Tarif 3 einschalten - Vorprogrammierung |
| - Tarif 4 einschalten | - Tarif 4 einschalten - Vorprogrammierung |
| - Rückmeldung starten<br>- letzte Vorprogrammierung streichen | - neuer Tarif 1 oder neuer Tarif 2 oder neuer Tarif 3 oder neuer Tarif 4<br>- Hauptgruppen- oder Untergruppen- oder Individualadressen ändern |

Folgedaten können unter anderem Zeitangaben sein, welche dem Empfänger mit teilen, wann er die Anweisung auszuführen hat. Man spricht dann von Vorprogrammierung. Des weiteren können Folgedaten neue Adressen sein, welche dem Empfänger zugeteilt werden. Damit können Empfänger umadressiert, das heisst auch umgruppiert werden (flexible Strukturierbarkeit).

In Tabelle 3 sind Beispiele für Aufgaben und die entsprechenden Sendungen angegeben, wobei die in den Figuren benützten Abkürzungen verwendet werden.

Tabelle 3

| AUFGABE | SENDUNG |
|---|---|
| 1. Alle Boiler sofort ausschalten<br>2. Boiler 3kW temperiert einschalten<br>3. Boiler 3kW + 5kW in 3 Stunden temperiert einschalten<br>4. Klimaanlagen ab sofort zyklen, in 2 Std. dauernd einschalten | HG: Boiler, AW: sofort ausschalten<br>HG: Boiler, UG: 3kW, AW temp. ein<br><br>HG: Boiler, UG1: 3kW, UG2: 5kW, AW1: temperiert ein, AW2: terminiert DT: in 3 Stunden<br>HG: Klimaanlagen, AW1: Zykler ein, AW2: terminiert ein, DT: in Std. |
| 5. kWh-Zähler<br><br>- Niedertarif einschalten<br>- Hochttarif ändern in 20 Rp./kWh<br>- Hochtarif in 5 Std. einschalten | HG: kWh-Zähler, AW1: Niedertarif ein, AW2: Hochtarif ändern, AW3: Hochtarif terminiert ein, DT2: 20 Rp./kWh, DT3: in 5 Stunden |
| 6. Boiler 3kWh Adressänderung | HG: Boiler UG, 3kWh, AW1: Adressänderung HG, AW2: Adressänderung UG, DT1: neue Adr. HG, DT2: neue Adr. UG |
| 7. kWh-Zähler Usterstrasse Rückmeldung starten | HG: kWh-Zähler, UG: Usterstrasse<br><br>AW: Rückmeldung starten |

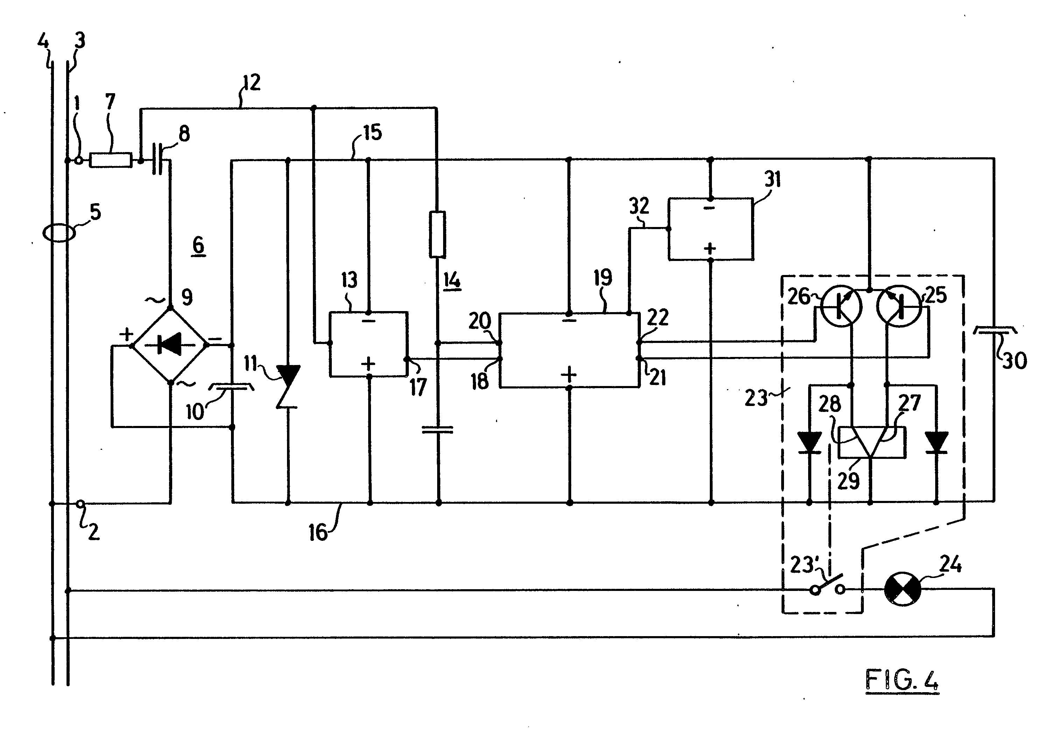

Fig. 3 zeigt in Zeile a schematisch die Sendung für Beispiel 1 von Tab. 3, in Zeile b die Sendung für Beispiel 2, in Zeile c die Sendung für Beispiel 4 und in Zeile d diejenige für Beispiel 5. Da jedes einzelne Telegramm oder Teiltelegramm durch ein Impulsbild mit 10 Schritten plus einem Startimpuls von je 0,6 s Dauer gebildet ist, beträgt die Zeitdauer für die Aussendung einer Hauptgruppen-, Untergruppen- oder Individualadresse, einer Anweisung oder einer Dateninformation je 6,6 s. Zwischen diese einzelnen Teiltelegramme wird noch eine Pause von vorzugsweise ebenfalls 0,6 s Dauer eingeschaltet.

Dadurch sind für die Aussendung der Hauptgruppenadresse HG plus der Anweisung AW von Zeile a 13,8 s erforderlich (bei maximal 119 Adressiermöglichkeiten); für die Aussendung der Hauptgruppenadresse HG, der Untergruppen adresse UG und der Anweisung AW von Zeile b 21 s (bei maximal 14'161 Adressiermöglichkeiten); für die Aussendung der Hauptgruppenadresse HG, der Anweisungen AW1 und AW2 und der Daten DT von Zeile c 28,2 s (bei maximal 119 Adressiermöglichkeiten); und für die Aussendung der Hauptgruppenadresse HG, der Anweisungen AW1, AW2, AW3 und der Daten DT2 und DT3 von Zeile d 42,6 s (bei ebenfalls maximal 119 Adressiermöglichkeiten).

In Fig. 4 ist ein für das beschriebene System geeigneter Rundsteuerempfänger dargestellt. Dieser ist mit seinen Eingangsklemmen 1 und 2 an zwei Leiter 3 bzw. 4 eines Wechselstromnetzes 5 angeschlossen, welchem in bekannter Weise die beschriebenen Rundsteuerbefehle (inklusive Adressen und Daten) in Form von Wechselstromimpulssequenzen überlagert werden. Zur Stromversorgung des Rundsteuerempfängers ist ein Stromversorgungsteil 6 vorgesehen, welcher eine an die Eingangsklemmen 1 und 2 angeschlossene Serienschaltung einer Schutzimpedanz 7, eines Serienkondensators 8 und eines Vollweg-Gleichrichters 9 aufweist. An die Gleichstromanschlüsse des letzteren sind ein Siebkondensator 10 und eine Z-Diode 11 angeschlossen.

Von einem Schaltungspunkt zwischen Schutzimpedanz 7 und Serienkondensator 8 führt eine Leitung 12 einerseits zu einem frequenzselektiven Empfangsteil 13 und anderseits an ein RC-Glied 14. Der Empfangsteil 13, welcher zum Beispiel aktive RC-Filter als Selektionsmittel für die Rundsteuerfrequenz aufweist, ist einerseits an eine Minussammelschiene 15 und anderseits an eine Plussammelschiene 16 angeschlossen und erhält dadurch aus dem Stromversorgungsteil 6 die erforderliche Speisespannung. Eine Ausgangsklemme 17 des Empfangsteils 13 ist mit einem ersten Eingang des Auswerteils 19 des Rundsteuerempfängers verbunden.

An einem zweiten Eingang 20 des Auswerteils 19 liegt eine Leitung, welche von einem Schaltungspunkt zwischen Widerstand und Kondensator des RC-Gliedes 14 abzweigt. Ueber letzteres wird dem zweiten Eingang 20 des Auswerteils 19 ein netzfrequentes Signal zugeführt, mit dessen Hilfe im Auswerteteil 19 eine Folge von an die Netzfrequenz gebundenen Taktimpulsen für eine elektronische Zeitbasis für die Auswertung der empfangenen Impulssequenzen gebildet wird.

Der Auswerteteil 19, welcher an die Minus- und Plussammelschiene 15 bzw. 16 angeschlossen ist und dadurch vom Stromversorgungsteil 16 die erforderliche Speisespannung erhält, ist als programmierbarer Mikrocomputer realisiert und enthält unter anderem elektronische Speicher und Schieberegister zur zeitweisen Speicherung empfangener Impulssequenzen. Der Auswerteteil 19 ist mit einem nichtvolatilen elektronischen Speicher 31 verbunden, welcher alle für den betreffenden Empfänger gültigen Adress-, Anweisungs- und Datencodes beinhaltet. Ueber eine serielle Verbindung 32 kann der Auswerteteil 19 diese Codes zu Vergleichszwecken auslesen oder bei Bedarf neu beschreiben, wenn beispielsweise eine Umadressierung erfolgt. Ausserdem ist der Auswerteteil 19 so aufgebaut, dass er eine Sequenz von asynchronen Codes richtig auswerten kann.

Jeder dieser asynchronen Codes ist so aufgebaut, dass er nach einem be stimmten Vorlauf, der den jeweiligen Code zum vorherigen abgrenzt, mit einem Startimpuls beginnt, auf den N Steuerimpulsplätze folgen. Der Startimpuls dient zur Synchronisierung der Empfängerschaltung mit dem Sender und die Steuerimpulsplätze sind als Codewörter ausgelegt. Wie anhand von Fig. 2 schon erwähnt wurde, werden vorzugsweise drei Mengen von Codewörtern verwendet, eine erste Menge von 3 aus N-, eine zweite Menge von 5 aus N- und eine dritte Menge von 7 aus N-Codes. Dies ergibt eine erhöhte Sicherheit, da ein Bitfehler immer erkannt werden kann, weil er nicht zu einem gültigen Code führt. Wenn, so wie beschrieben, N gleich 10 gewählt wird, dann ergibt sich für die zweite Menge die vom DECABIT-System bekannte 5 aus 10-Codierung.

Jede gespeicherte Impulssequenz wird mit einer dem betreffenden Rundsteuerempfänger zugeordneten Impulssequenz (Anweisung, Adresse) verglichen und bei positivem Vergleichsergebnis wird von einem ersten oder zweiten Ausgang 21 bzw. 22 des Auswerteteils 19 ein Gutbefundsignal als Betätigungssignal für ein mit 23 bezeichnetes fernzusteuerndes Schaltorgan abgegeben. Zu dem Schaltorgan 23 gehört darstellungsgemäss ein Schalter 23', und je nachdem, an welchem der beiden Ausgänge 21 oder 22 das Gutbefundsignal erscheint, wird der Schalter 23' ein- oder ausgeschaltet, wodurch ein Stromverbraucher 24 an das Netz 5 angeschlossen bzw. von diesem abgeschaltet wird.

Zur Betätigung des Schalters 23' wird durch das am Ausgang 21 oder 22 des Auswerteteils 19 erscheinende Signal entweder ein Schalttransistor 25 oder ein Schalttransistor 26 durchgeschaltet, so dass die eine oder die andere der beiden Wicklungen 27, 28 eines Relais 29 Strom führt und dadurch den Schalter 23' ein- bzw. ausschaltet. Zu den Wicklungen 27, 28 sind Schutzdioden parallel geschaltet, um die Transistoren 25 und 26 gegen induktive Spannungsstösse zu schützen. Dem Schaltorgan 23 ist ein Schaltenergiespeicher 30 in Form eines Speicherkondensators mit einer für die Betätigung des Schalters 23' ausreichenden Kapazität zugeordnet.

Der Rundsteuerempfänger ist in Fig. 4 stark vereinfacht dargestellt; für eine ausführlichere Beschreibung wird auf die CH-A-567 824 und auf die DEA-36 04 753 sowie auf den Artikel "Integrierte elektronische Rundsteuerempfänger" von H. de Vries in Bulletin SEV, Nr. 10/1976 verwiesen. Wie diesem Artikel entnommen werden kann, enthält der frequenzselektive Empfangsteil 13 einen Gleichrichter als AM-Demodulator und einen diesem nachgeschalteten Pegeldetektor. Der letztere liefert ein digitales Signal, dieses ist das wiedergewonnene und durch die Uebertragung verzerrte Basisbandsignal. Das digitalisierte Signal wird abgetastet und dem Auswerteteil 19 zugeführt.

Anstelle des Schaltorgans 23 können dem Auswerteteil 19 auch andere geeignete Elemente, beispielsweise Datenempfänger, Anzeigen, und so weiter nachgeschaltet sein. Auch bezüglich des Empfangsteils 13 sind verschiedene Varianten möglich und es könnten beispielsweise anstatt eines Empfangsteils 13 für amplitudenmodulierte Signale Demodulatoren für FSK- oder für PSK-Systeme eingebaut werden.

Der Auswerteteil 19 ist in mehrere Blöcke gegliedert und enthält je einen Block für die Decodierung der Adressen, für die Decodierung der Anweisungen und für die Interpretation der Daten. Dazu kommt noch ein vierter Block zur Ueberwachung.

Der Block für die Adressendecodierung überprüft, ob die empfangenen Adresscodes den dem jeweiligen Empfänger spezifisch zugeordneten Adressen entsprechen, und führt diese Ueberprüfung für die Hauptgruppenadresse und gegebenenfalls auch für die Untergruppen- und die Individualadresse durch.

Der Block für die Anweisungsdecodierung überprüft die empfangenen Codes daraufhin, ob sie einer der im jeweiligen Empfänger möglichen Anweisungen zugeordnet werden können. Der Block für die Dateninterpretation interpretiert die gegebenenfalls empfangenen Daten. Er ist je nach Einsatz des Empfängers individuell gestaltet. Beispielsweise ist er in der Lage, ein 7 aus 10 Codewort einer Wertigkeit im Bereich von 1 zu 100 linear zuzuordnen und damit aus einem 7 aus 10 Codewort eine zweistellige Zahl zu generieren. Denkbar sind auch Zuordnungen zu Buchstaben, womit ganze Texte übermittelt werden können, welche dann auf einer allenfalls vorhandenen Anzeigevorrichtung angezeigt werden können. Der Ueberwachungsblock schliesslich überprüft Anfang und Ende jeder Sendung.

Der Anfang wird anhand des ersten Startimpulses erkannt und das Ende dann, wenn eine Sendepause über ein Anzahl von Impulsplätzen erfolgt, die grösser ist als die grösste mögliche Folge von leeren Steuerimpulsplätzen. Ausserdem überprüft der Ueberwachungsblock die Codes auf Bitfehler.

Es sei noch darauf hingewiesen, dass die Verwendung von drei Klassen von Adressen nur als Ausführungsbeispiel zu verstehen ist. Je nach der gewünschten Anzahl von Strukturebenen können auch mehr als diese drei Klassen von Adressen angewendet werden, beispielsweise zusätzlich noch eine übergeordnete Supergruppe und so weiter.

**Ansprüche**

1. Verfahren zur Fernsteuerung von Schaltorganen mittels von einem Sender dem elektrischen Versorgungsnetz überlagerter und den einzelnen auszulösenden Funktionen der Schaltorgane zugordneter Anweisungen in Form von Impulsbildern fester Länge, welche aus einer Mehrzahl von Schritten bestehen, von denen eine vorgegebene Anzahl mit einem Steuerimpuls belegt ist, wobei während eines Sendevorgangs ein der jeweiligen Funktion entsprechendes Impulsbild gesendet und beim Empfänger auf Uebereinstimmung mit dem diesem zugeordneten Impulsbild überprüft und bei Gutbefund zur Steuerung des entsprechenden Schaltorgans verwendet wird, dadurch gekennzeichnet, dass jedes Sende-Impulsbild zusätzlich zur jeweiligen Anweisung (AWl-AWm) mindestens eine Adresse (HGl-HGh; UGl-UGn; IAl-IAi) und gegebenenfalls eine Dateninformation (DTl-DTr) aufweist, wobei die Anzahl der Adressen dem Detaillierungsgrad angepasst ist und jede Adresse und die Dateninformation aus der genannten Mehrzahl von Schritten fester Länge besteht.

2. Verfahren nach Anspruch 1, dadurch gekennzeichnet, dass für die Anweisungen (AWl-AWm) und für die einzelnen Adressen (HGl-HGh; UGl-UGn; IAl-IAi) verschiedene Mengen von Codewörtern verwendet werden.

3. Verfahren nach Anspruch 2, dadurch gekennzeichnet, dass je nach Bedarf mehrere Klassen von Adressen verwendet werden, und zwar vorzugsweise sogenannte Hauptgruppenadressen (HGl-HGh) für eine bestimmte Art glei cher Verbraucher, sogenannte Untergruppenadressen (UGl-UGn) für bestimmte Untergruppen gleicher Verbraucher einer Hauptgruppe und sogenannte Individualadressen (IAl-IAi) für die einzelnen Verbraucher einer Untergruppe.

4. Verfahren nach Anspruch 2 oder 3, dadurch gekennzeichnet, dass für die Adressen (HGl-HGh; UGl-UGn; IAl-IAi), die Anweisungen (AWl-AWm) und die Dateninformationen (DTl-DTr) drei Gruppen von Codewörtern verwendet werden, und zwar eine erste Gruppe mit einem drei aus N-, eine zweite Gruppe mit einem fünf aus N- und eine dritte Gruppe mit einem 7 aus N-Code.

5. Verfahren nach Anspruch 4, dadurch gekennzeichnet, dass N gleich 10 gewählt wird.

6. Verfahren nach Anspruch 5, dadurch gekennzeichnet, dass Codewörter mit vielen Bit-Wertigkeitswechseln, das heisst, mit Flanken von Bitwert 0 zu Bitwert 1 und umgekehrt, bevorzugt verwendet werden.

7. Verfahren nach einem der Ansprüche 1 bis 6, dadurch gekennzeichnet, dass der Ablauf einer Sendung derart organisiert wird, dass ein Empfänger oder eine Empfängergruppe gezielt adressiert und angewiesen wird, seine Adresse beziehungsweise ihre Adressen zu ändern, wobei die neue Adresse beziehungsweise die neuen Adressen als Dateninformationen (DTl-DTr) übermittelt werden.

8. Einrichtung zur Durchführung des Verfahrens nach Anspruch 1, mit einem Sender und mit diesem zugeordneten Rundsteuerempfängern mit einem Eingangs- und einem Auswerteteil, dadurch gekennzeichnet, dass der Auswerteteil (19) je einen Block für die Decodierung der Adressen (HGl-HGh; UGl-UGn; IAl-IAi), für die Decodierung der Anweisungen (AWl-AWm) und für die Interpretation der Dateninformationen (DTl-DTr) aufweist.

9. Einrichtung nach Anspruch 8, dadurch gekennzeichnet, dass der Auswerteteil (19) einen Ueberwachungsblock für die Ueberprüfung von Beginn und Ende jeder Rundsteuersendung und für die Ueberprüfung der einzelnen Codes auf Bitfehler aufweist.

10. Einrichtung nach Anspruch 8 oder 9, dadurch gekennzeichnet, dass dem Auswerteteil (19) ein nicht volatiler elektronischer Schreib/Lese-Speicher (31) zugeordnet ist, in welchem die programmierten Adresscodes, Anweisungscodes und Datencodes abgelegt und bei Bedarf neu zuteilbar sind.

11. Einrichtung nach Anspruch 10, dadurch gekennzeichnet, dass die Neuzuteilung der im elektronischen Schreib/Lesespeicher (31) abgelegten Codes vom Sender über das Versorgungsnetz steuerbar ist.

S

FIG. 1

a    HG → S AW →

b    HG → UG → AW →

c    HG → AW1

AW2 → DT →

d    HG → AW1

AW2 → DT2

AW3 → DT3 →

FIG. 3

FIG. 2

EP 0 299 311 A2

EP 0 299 311 A2

FIG. 4